# FASCICULE DE BREVET EUROPEEN

(11) **EP 1 352 210 B1**
(45) Date de publication et mention de la délivrance du brevet: **25.07.2012**
(21) Numéro de dépôt: 02716069.6
(22) Date de dépôt: 10.01.2002
(51) Int. Cl.: G01B 7/16, B60C 13/00, G01L 1/14, B60C 11/00

(54) **PROCEDE ET DISPOSITIF D'EVALUATION DE DEFORMATIONS ET D'EFFORTS**
VERFAHREN UND VORRICHTUNG ZUR BESTIMMUNG VON DEFORMATIONEN UND KRÄFTEN
METHOD AND DEVICE FOR EVALUATING DEFORMATIONS AND FORCES

(30) Priorité: 10.01.2001 FR 0100353
(43) Date de publication de la demande: 15.10.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: POULBOT, Valéry, F-63430 Les Martres D'artiere (FR); FAGOT-REVURAT, Lionel, F-63260 Ussel de Vensat (FR); DEMAIE, Heathcliff, F-63000 Clermont-Ferrand (FR)
(74) Mandataire: Lasson, Cédric Y. M.
(86) Numéro de dépôt international: PCT/EP2002/000180
(87) Numéro de publication internationale: WO 2002/057711

(56) Documents cités:
- EP-A- 0 756 162
- DE-A- 3 503 805
- DE-C- 801 864
- US-A- 4 102 422

## Description

La présente invention concerne la liaison au sol des véhicules automobiles et en particulier les informations relatives aux efforts qui s'exercent entre le véhicule et le sol ou entre les différents éléments de la liaison au sol.

La liaison au sol des véhicules automobiles est constituée d'une chaîne d'éléments ou structures reliant la caisse du véhicule au sol sur lequel se déplace le véhicule. Au sein de cette chaîne, on peut identifier les éléments ou structures suivants: le pneumatique, la roue, le moyeu, le porte-moyeu, les rotules, les pivots, les bras ou triangles de suspension, les articulations élastomériques ou bushings, les ressorts, les amortisseurs. Ces éléments ou structures transmettent à la caisse les efforts subis par le pneumatique dans l'aire de contact. Ces éléments ou structures sont plus ou moins déformables c'est-à-dire qu'ils se déforment plus ou moins lorsqu'un effort donné est transmis par la chaîne. Si l'on veut connaître les efforts transmis par la chaîne, on peut en théorie les déduire des déformations de chaque élément de la chaîne. Il est par exemple connu de mesurer les efforts dans les bras de suspension à l'aide de jauges de déformation dont la résistante électrique varie en fonction de la déformation, que les bras subissent. La présente invention propose d'exploiter le fait que la déformation est plus sensible et/ou plus significative dans certains éléments de la liaison au sol. C'est le cas des pneumatiques ou des articulations élastomériques. En effet, ces éléments sont constitués en grande partie d'un matériau élastomérique, généralement le caoutchouc, de sorte que leur rigidité est très inférieure à celle des autres éléments de la chaîne qui sont généralement métalliques.

Selon une caractéristique supplémentaire de l'invention, on utilise la mesure d'une caractéristique électrique capacitive d'au moins un dipôle électrique dont le diélectrique est constitué par un corps élastomérique soumis aux déformations de la structure.

Le fait d'utiliser la variation d'une caractéristique capacitive permet en particulier une mesure à faible consommation d'énergie. Ceci est particulièrement intéressant en matière d'alimentation électrique du dispositif qui peut se faire par exemple par une batterie de taille réduite ou par télé-alimentation.

L'invention concerne donc un dispositif d'évaluation de déformations d'une structure comprenant un corps élastomérique et destinée à appartenir à la liaison au sol d'un véhicule, ledit dispositif comprenant un dipôle électrique dont le diélectrique est formé par ledit corps élastomérique et un circuit électronique d'analyse sensible à une variation d'une caractéristique capacitive du dipôle occasionnée par lesdites déformations dudit corps. Le dipôle comprend des électrodes filaires sensiblement parallèles.

Le dispositif de l'invention peut également comprendre en outre des moyens d'évaluation d'efforts subis par ladite structure en fonction desdites déformations provoquées par lesdits efforts.

Le dispositif de l'invention peut être mis en oeuvre dans un pneumatique.

L'invention concerne également un pneumatique comportant au moins un tel dispositif. Selon un premier mode de réalisation, le dipôle est situé dans l'épaisseur de la bande de roulement et préférentiellement dans le volume d'un élément de sculpture. Le diélectrique du dipôle peut avantageusement être constitué par le matériau qui constitue la bande de roulement au moins dans la zone où il se situe. Les électrodes du dipôle sont filaires, sensiblement perpendiculaires à la direction longitudinale de la bande de roulement et sensiblement parallèles à la direction transversale de la bande de roulement afin d'évaluer les déformations longitudinales. Au contraire, pour évaluer les déformations transversales, les électrodes filaires du dipôle sont de préférence sensiblement perpendiculaires à la direction transversale de la bande de roulement et sensiblement parallèles à la direction longitudinale de la bande de roulement. Dans ces configurations, les électrodes sont de préférence situées sensiblement dans le même plan radial du pneumatique. Ledit dispositif peut également comprendre au moins trois électrodes qui constituent entre elles au moins deux dipôles.

Selon un autre mode de réalisation de l'invention, le dispositif comprend deux électrodes filaires situées dans une zone de la bande de roulement qui n'est pas destinée à entrer en contact avec le sol lors du roulage du pneumatique, par exemple entre deux pains de gomme de la bande de roulement.

Selon encore un autre mode de réalisation de l'invention, le dispositif est situé dans un flanc du pneumatique et le diélectrique est de préférence constitué par le matériau élastomérique qui constitue le flanc au moins dans la zone où il se situe. Dans le flanc, les électrodes du dipôle sont de préférence sensiblement parallèles, orientées sensiblement radialement. Les électrodes peuvent par exemple être situées sensiblement à la même distance du plan médian du pneumatique ou être distantes l'une de l'autre dans la direction de l'épaisseur du flanc selon le type de déformations auxquelles on souhaite que la dispositif soit le plus sensible.

Les électrodes peuvent être constituées par des peignes inter-digités afin d'améliorer la qualité du signal.

Le pneumatique selon l'invention peut comprendre une pluralité de dipôles disposés le long de la circonférence du flanc et connectés entre eux par exemple en parallèle pour constituer un dipôle unique.

L'invention peut concerner également une articulation élastomérique, en particulier destinée à la liaison au sol d'un véhicule, comprenant au moins un tel dispositif d'évaluation.

L'invention peut concerner également un procédé d'évaluation de déformations d'une structure comprenant un corps élastomérique consistant à déduire lesdites déformations de variations d'une caractéristique capacitive d'au moins un dipôle dont le diélectrique est formé par ledit corps élastomérique.

L'invention peut concerner également un procédé d'évaluation des efforts subis par une structure comprenant un corps élastomérique, ledit procédé consistant à évaluer lesdits efforts à partir de déformations dudit corps provoquées par lesdits efforts, la résistivité dudit corps étant supérieure à 10¹³ Ω.cm, ledit procédé étant caractérisé en ce que lesdites déformations sont déduites de variations d'une caractéristique capacitive d'au moins un dipôle dont le diélectrique est formé par ledit corps élastomérique

Selon leurs compositions, les matériaux élastomériques sont plus ou moins conducteurs, c'est-à-dire qu'ils constituent un plus ou moins bon diélectrique. Plus le corps élastomérique est un bon diélectrique, moins la mesure de capacité ou d'impédance capacitive est affectée par les courants de fuite du dipôle. C'est pourquoi, un mode de réalisation préféré du dispositif de l'invention utilise comme diélectrique un matériau élastomérique dont la résistivité est supérieure à 10⁸ Ω.cm et préférentiellement encore supérieure à 10¹³ Ω.cm. Pour ce faire, on peut utiliser un élastomère dont la charge renforçante est constituée de matière isolante comme par exemple la silice, l'alumine, la craie, ou l'amidon afin de limiter ou supprimer la part de noir de carbone conventionnellement utilisé car celui-ci est conducteur. De plus, la conductivité résultante des mélanges chargés au noir de carbone est difficile à connaître précisément, ce qui rend la mesure de la caractéristique capacitive plus incertaine.

La caractéristique capacitive peut être la capacité que l'on mesure en régime électrique continu ou l'impédance capacitive que l'on mesure en régime électrique dynamique.

Ainsi le dispositif de l'invention permet d'évaluer les efforts subis par la structure. Cette évaluation peut être faite par le dispositif lui-même ou par un système de calcul intégré au véhicule qui utilise les mesures de déformations issues du dispositif de l'invention. Le signal représentatif de la variation de caractéristique capacitive et donc de la déformation de la structure peut également être utilisé tel quel par un système de calcul intégré au véhicule. En fait, le dispositif de l'invention est un "capteur" permettant de détecter les déformation d'une structure déformable et capable d'élaborer un signal représentatif de la déformation, ce signal étant utilisable par le dispositif lui-même ou par d'autres dispositifs comme signal d'entrée dans le cadre par exemple de l'assistance à la conduite (ABS, ASR, ESP, mesure de pression des pneumatiques, correcteur d'assiette, contrôle du roulis de caisse, etc...).

Les électrodes du dipôle sont des éléments filaires sensiblement parallèles. Par "éléments filaires" on entend des éléments dont la longueur est importante par rapport aux autres dimensions comme par exemple des fils, des faisceaux de fils, des câbles, des poutres, des tubes. De la sorte, le dispositif est sensible aux déformations principalement dans une seule direction qui est la direction qui provoque une variation de la distance entre les électrodes. De plus, la rigidité du diélectrique selon la direction perpendiculaire à l'axe d'un élément filaire est peu affectée par la rigidité longitudinale de cet élément filaire.

De préférence, les électrodes sont métalliques et constituées de fils ou d'arrangements de fils comparables à ceux qui sont conventionnellement utilisés pour renforcer les pneumatiques.

Les caractéristiques précitées de la présente invention, ainsi que d'autres seront mieux comprises à la lecture de la description des figures, parmi lesquelles :
- la figure 1 est une vue schématique en coupe dans un plan parallèle au plan de roue d'une partie de la bande de roulement d'un pneumatique instrumentée selon un premier mode de réalisation,
- la figure 1a est une vue schématique en coupe dans un plan parallèle au plan de roue d'une partie de la bande de roulement d'un pneumatique instrumentée selon un deuxième mode de réalisation,
- la figure 1b est une vue schématique en coupe dans un plan parallèle au plan de roue d'une partie de la bande de roulement d'un pneumatique instrumentée selon un troisième mode de réalisation,
- la figure 1c est une vue schématique en coupe dans un plan parallèle au plan de roue d'une partie de la bande de roulement d'un pneumatique instrumentée selon un quatrième mode de réalisation,
- la figure 2 est une vue schématique en coupe dans un plan parallèle au plan de roue d'une partie de la bande de roulement d'un pneumatique instrumentée selon une variante du premier mode de réalisation,
- la figure 2a est une vue schématique en coupe dans un plan parallèle au plan de roue d'une partie de la bande de roulement d'un pneumatique instrumentée selon une variante du deuxième mode de réalisation,
- la figure 2b est un vue schématique en coupe dans un plan parallèle au plan de roue d'une partie de la bande de roulement d'un pneumatique instrumentée selon une variante du troisième mode de réalisation,
- la figure 2c est un vue schématique en coupe dans un plan parallèle au plan de roue d'une partie de la bande de roulement d'un pneumatique instrumentée selon une variante du quatrième mode de réalisation,
- la figure 3 est un graphique expérimental illustrant la variation de la capacité différentielle mesurée, entre les deux dipôles électriques possédant une électrode commune tel que celui décrit à la figure 2c insérés dans la bande de roulement d'un pneumatique lorsque celui-ci roule, dans trois situations différentes.
- La figure 4 est une vue schématique d'un flanc de pneumatique instrumenté selon un cinquième mode de réalisation.
- La figure 4a est une vue schématique en coupe d'un flanc instrumenté selon le cinquième mode de réalisation.
- La figure 4b est un graphique expérimental illustrant l'évolution de la capacité mesurée aux bornes d'un dipôle électrique inséré dans le flanc d'un pneumatique tel que celui décrit à la figure 4, lorsque celui-ci roule.
- La figure 5 est une vue schématique d'un flanc instrumenté selon un sixième mode de réalisation.
- La figure 5a est une vue schématique en coupe d'un flanc instrumenté selon le sixième mode de réalisation.
- La figure 6 est un graphique expérimental illustrant l'évolution de la capacité mesurée aux bornes d'un dipôle électrique inséré dans le flanc d'un pneumatique tel que celui décrit à la figure 5, lorsque celui-ci roule.
- La figure 7 est une vue schématique d'un dipôle électrique configuré selon un premier arrangement.
- La figure 7a est une vue schématique d'un dipôle électrique configuré selon un deuxième arrangement.
- La figure 7b est une vue schématique d'un dipôle électrique configuré selon un troisième arrangement.
- La figure 8 est une vue schématique d'un pneumatique instrumenté selon le mode de réalisation de la figure 4 en deux positions réparties sur le tour de roue.
- La figure 9 est un graphique expérimental illustrant l'évolution de la capacité aux bornes d'un dipôle électrique formé de deux dipôles électriques élémentaires reliés en parallèle et insérés dans le flanc d'un pneumatique selon la figure 4, lorsque celui-ci roule.

Ces figures illustrent deux types principaux d'instrumentation d'une enveloppe de pneumatique, dans des zones de fortes déformations de celle-ci, la bande de roulement et le flanc, le capteur décrit étant par essence un capteur de déformation. L'instrumentation d'une enveloppe de pneumatique selon cette méthodologie ne se limite cependant pas à ces deux zones.

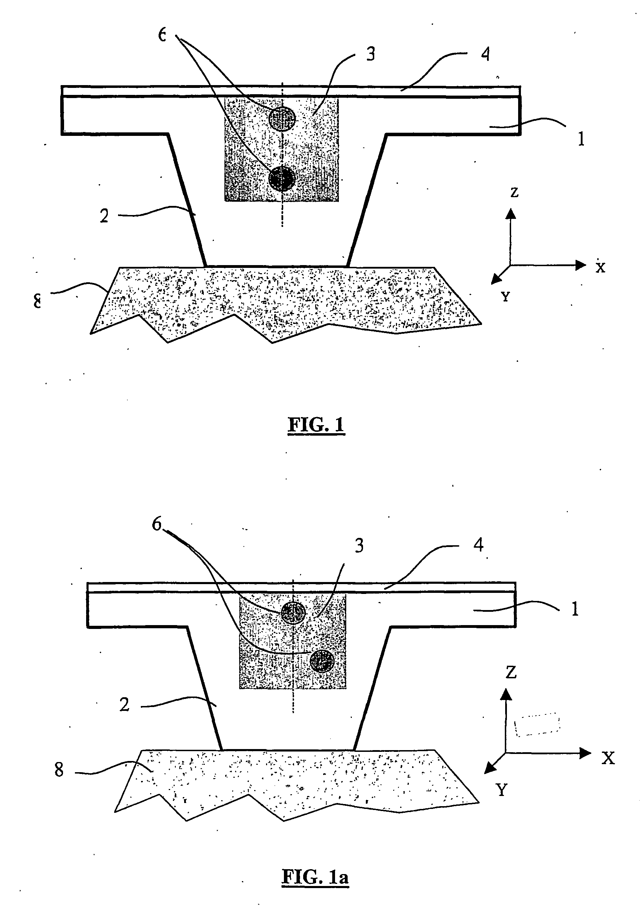

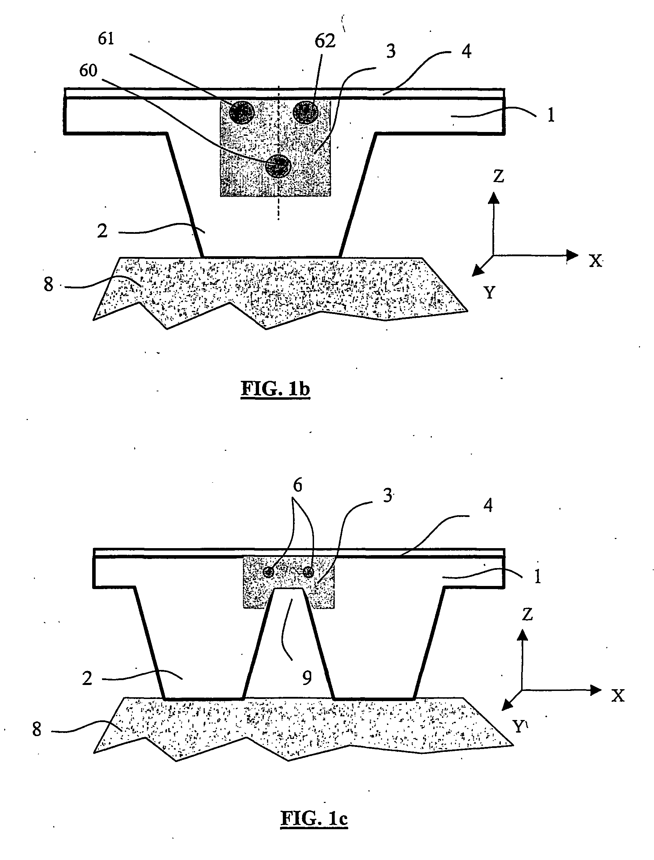

La Figure 1 illustre une première façon d'instrumenter la bande de roulement d'un pneumatique selon l'invention. Les directions sont conventionnement repérées comme suit: X est la direction longitudinale de la bande de roulement (c'est à dire la direction de déplacement du pneumatique lorsqu'il roule sans glissement), Y est la direction transversale de la bande de roulement et Z est la direction normale au plan de la bande de roulement dans l'aire de contact (c'est à dire "radiale" du pneumatique ou verticale par rapport au sol horizontal.

La bande de roulement 1 comprend un corps élastomérique 3 isolant, par exemple chargé à la silice, positionné à l'extérieur des renforts de ceinture 4 et dans le volume d'un pain de sculpture 2. Le corps élastomérique 3 constitue le diélectrique d'un dipôle électrique. Les électrodes du dipôle qui consistent en deux fils 6 métalliques et parallèles, sont positionnées perpendiculairement à la direction longitudinale X de la bande de roulement, dans un même plan radial YZ. Les caractéristiques capacitives du dipôle ainsi constitué varient en fonction de la déformation du corps élastomérique 3.

Lorsque le pneu roule sur le sol 8, le pain de sculpture 2 est soumis à des efforts variables. Ces efforts développés à l'interface du pain de sculpture 2 et du sol 8, sont transmis à l'intérieur de la bande de roulement 1, et ont pour effet de déformer le corps élastomérique 3. Alors, la distance entre les fils métalliques 6 du dipôle électrique varie, ce qui modifie son impédance électrique capacitive ou sa capacité. L'évolution de l'impédance électrique capacitive ou de la capacité du dipôle électrique est fortement corrélé aux efforts développés à l'interface entre le pain de sculpture 2 et la chaussée 8 et ceci peut permettre éventuellement d'évaluer ces efforts.

Un tel arrangement spatial des électrodes filaires 6 qui constituent le dipôle électrique rend la mesure capacitive particulièrement sensible aux cisaillements suivant la direction de roulage X. Cette mesure n'est toutefois pas sensible au sens de la déformation de cisaillement suivant la direction X.

Une manière de minimiser encore la sensibilité du dipôle électrique aux cisaillements développés suivant la direction Y perpendiculaire à X, consiste à dimensionner les électrodes filaires 6 de telle sorte que le rapport de leurs longueurs soit sensiblement différent de 1 et que leur positionnement relatif (le long de l'axe Y) soit tel que la longueur en regard des électrodes ne varie pas en cas de cisaillement selon la direction Y.

Le dipôle électrique précédemment décrit peut être positionné, non plus perpendiculairement, mais parallèlement à la direction de roulage X, dans un même plan XZ. Ainsi, la mesure capacitive entre les deux électrodes filaires 6 devient particulièrement sensible aux cisaillements développés suivant la direction Y et sa sensibilité aux cisaillements développés suivant la direction de roulage X peut être minimisée de la même façon que précédemment.

La figure 1a représente une variante de la figure 1 dans laquelle on a utilisé les mêmes éléments repérés par les mêmes références. La différence réside dans le fait que les électrodes filaires 6 ne sont pas situées dans le même plan radial vertical YZ en l'absence de déformation. Cet arrangement spatial des électrodes filaires 6 présente l'avantage, par rapport à l'arrangement décrit à la figure 1, de rendre la mesure sensible au sens du cisaillement développé suivant la direction X (respectivement Y pour la configuration alternative décrite en relation avec la figure 1). En effet, si le décalage initial est suffisant, la caractéristique capacitive augmentera pour un sens de cisaillement et diminuera pour un cisaillement de sens inverse. On comprend que le décalage est suffisant lorsqu'il permet d'exclure que les électrodes aillent au-delà d'un alignement vertical quel que soit l'effort transmis. L'effort maximal est fonction de l'adhérence et de la charge.

La figure 1b représente une variante de la figure la dans laquelle on a utilisé les mêmes éléments repérés par les mêmes références. La différence réside dans le fait que les électrodes filaires sont ici au nombre de trois. Ainsi, le corps élastomérique 3 contient deux dipôles électriques qui possèdent une électrode commune 60. La position des deux autres électrodes (61 et 62), appartenant respectivement à chacun des 2 dipôles, est préférablement symétrique par rapport au plan radial vertical YZ passant par le centre de l'électrode commune 60.

Cette configuration à trois électrodes permet plusieurs modes d'exploitation des variations de caractéristique capacitive. En effet, on peut naturellement mesurer la variation de la caractéristique capacitive de chaque dipôle pour connaître les déformations et les efforts subis par le pain de gomme dé la bande de roulement comme décrit plus haut.

Cependant, cette configuration a en outre pour conséquence d'une part que la différence entre les mesures capacitives issues des deux dipôles est encore plus sensible (la sensibilité augmente au moins d'un facteur 2) aux déformations de cisaillement suivant la direction X et d'autre part que la somme de ces deux mesures capacitives est tout à fait représentative de la déformation de compression du diélectrique selon la direction Z. Ceci est dû au fait que l'effet de compression selon Z est sensiblement le même pour chacun des deux dipôles alors que l'effet du cisaillement selon X est sensiblement opposé pour chaque dipôle.

Cette configuration peut donc avantageusement être mise en oeuvre pour connaître les efforts selon Z et/ou pour connaître avec une plus grande précision les efforts de cisaillement.

Ces constatations sont respectivement valables lorsque les électrodes du dipôle électrique sont orientées parallèlement à la direction de roulage X et que la mesure concerne le cisaillement selon la direction transversale Y comme décrit plus haut.

La figure 1c représente un mode de réalisation de l'invention dans lequel on retrouve les éléments de la configuration de la figure 1. Cependant; dans ce mode de réalisation, le dipôle diélectrique est placé dans une rainure 9 de la bande de roulement 1. Et les deux électrodes 6 sont disposées dans un plan XY parallèle au plan de la bande de roulement. Cette configuration est donc principalement sensible à des déformations d'extension ou de compression selon la direction X liées a la déformation relative des deux pains de sculpture adjacents.

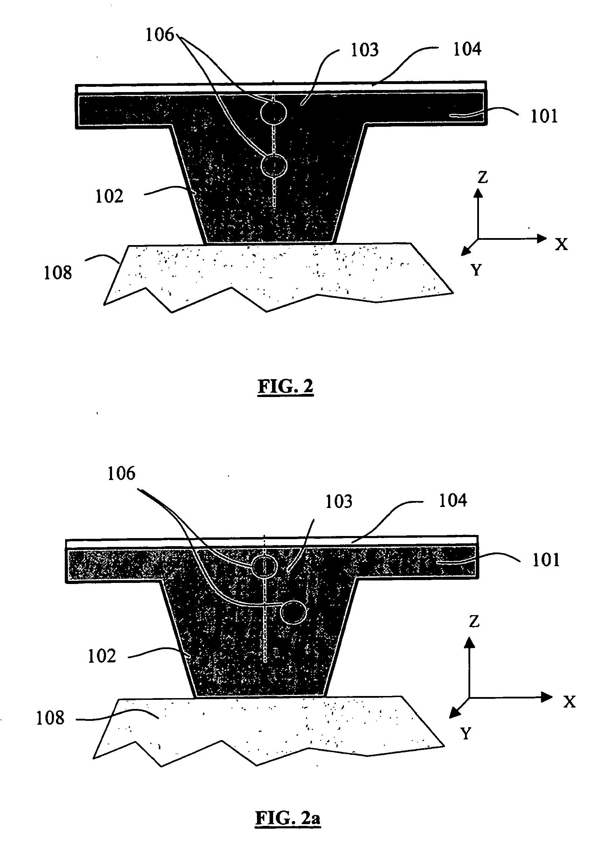

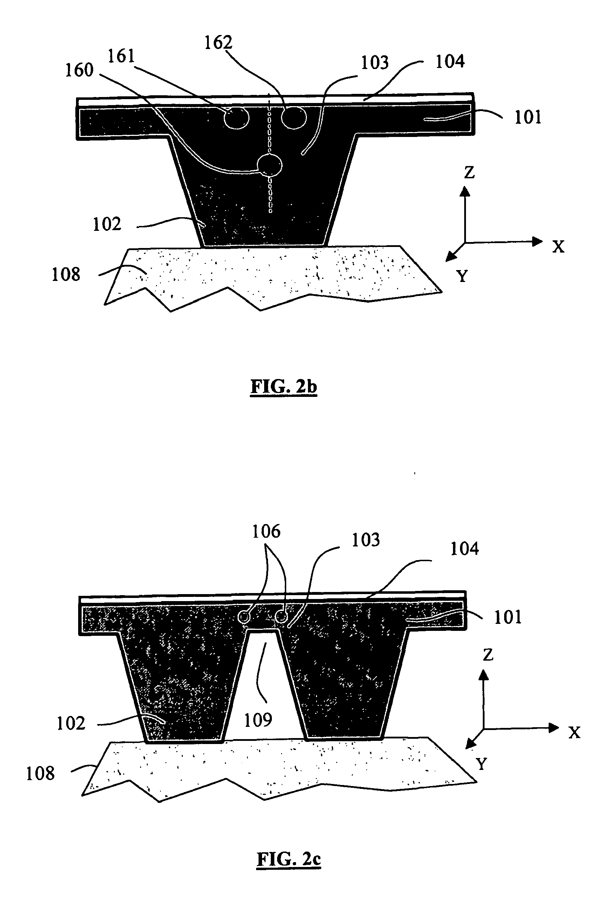

Les figures 2, 2a, 2b et 2c illustrent des variantes des bandes de roulement représentées respectivement aux figures 1a, 1b et 1c. Les éléments portent les mêmes références augmentées de 100 par rapport aux mêmes éléments desdites figures. La différence réside dans le fait que le corps élastomérique qui constitue le diélectique 103 est le même matériau que celui qui constitue le reste la bande de roulement ou à tout le moins les parties adjacentes de la bande de roulement. Cette caractéristique peut permettre une plus grande cohésion du pneumatique et une production optimisée lorsque le matériau employé pour la bande de roulement possède les caractéristiques recherchées pour le diélectrique.

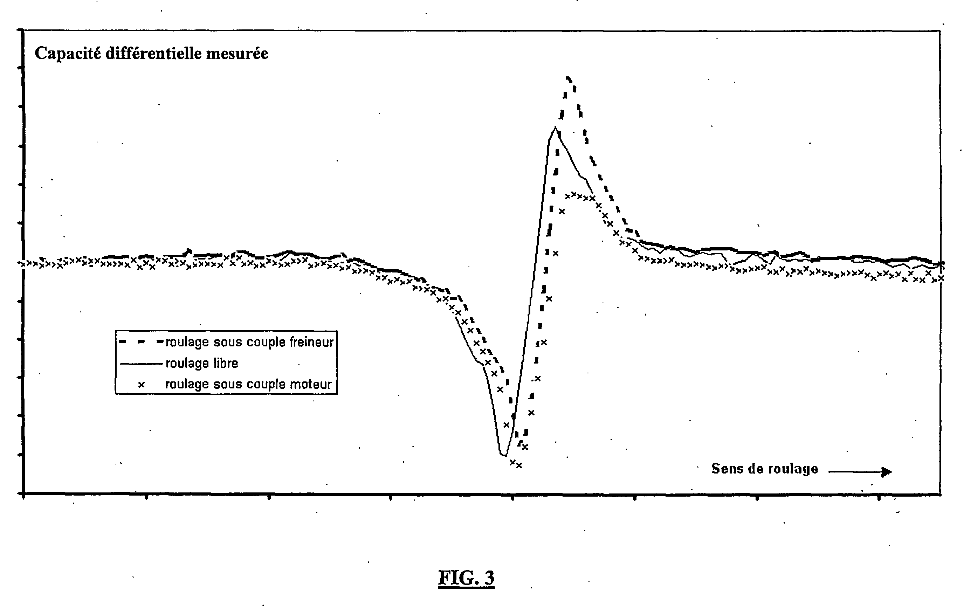

La figure 3 est un enregistrement graphique expérimental de l'évolution (au cours de la rotation du pneumatique) de l'impédance capacitive différentielle, c'est-à-dire de la différence entre les impédances capacitives du premier et du deuxième dipôle électrique, tels que décrits à la figure 2b. On observe dans la partie centrale du graphique les effets du passage du capteur dans l'aire de contact. Les trois courbes représentent des situations de roulage différentes. La courbe en trait continu fin représente le cas d'un pneumatique qui roule librement sous une charge donnée. La courbe en trait pointillé gras représente le cas du même pneumatique roulant sous la même charge mais soumis en outre à un couple freineur. Enfin, la courbe constituée par une succession de croit représente le cas du même pneumatique roulant sous la même charge mais soumis cette fois à un couple moteur. On visualise bien sur cette figure la relation qui existe entre la caractéristique électrique mesurée et les efforts subis.

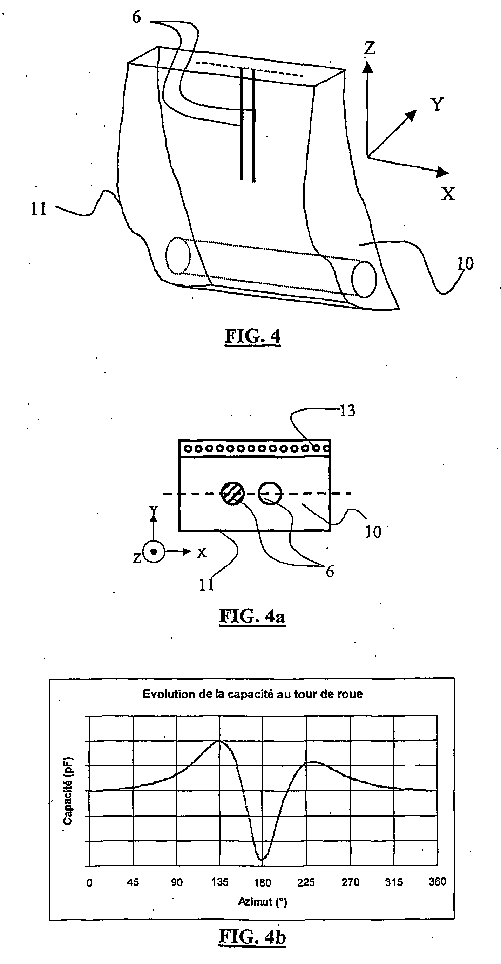

La figure 4 représente un cinquième mode de réalisation du dispositif de l'invention. Dans celui-ci, les électrodes 6 sont disposées dans l'épaisseur d'un flanc 10 d'un pneumatique. Le matériau qui constitue ce flanc est par exemple un élastomère suffisamment isolant. Dans ce mode de réalisation, les fils sont métalliques, sensiblement parallèles entre eux et au flanc et s'étendent le long d'un rayon du pneumatique. Chaque électrode est située sensiblement à la même distance du plan médian du pneumatique. Lorsque le pneumatique roule, les efforts transmis entre le véhicule et le sol ont pour effet de déformer le flanc 10. La distance entre les fils métalliques 6 du dipôle électrique varie, ce qui modifie son impédance capacitive ou sa capacité. L'analyse de cette variation permet d'évaluer des déformations du flanc 10 et par exemple d'évaluer les efforts transmis entre le véhicule et la route.

Les fils métalliques ne perturbent pratiquement pas le fonctionnement mécanique du pneumatique et l'évolution de la caractéristique capacitive mesurée est tout à fait représentative de l'extension circonférentielle du flanc.

Les électrodes 6 peuvent êtres positionnées n'importe où dans l'épaisseur du flanc 10. La coupe de la figure 4a représente un exemple dans lequel le dipôle électrique est positionné à l'extérieur des renforts de carcasse 13. Lors de la flexion du flanc, les renforts de carcasse 13 constituent la fibre neutre. Les déformations subies par le diélectrique sont d'autant plus importantes que le dipôle en est éloigné. D'autre part, un positionnement dans la partie intérieure du flanc présente l'avantage d'être mieux protégé des agressions mécaniques extérieures et des perturbations électromagnétiques. Les fils métalliques constituant les électrodes 6 du dipôle peuvent également faire partie intégrante des renforts de carcasse 13.

La figure 4b est un graphique montrant l'évolution de la capacité mesurée lorsque le pneumatique effectue une rotation complète dans un cas de charge donné.

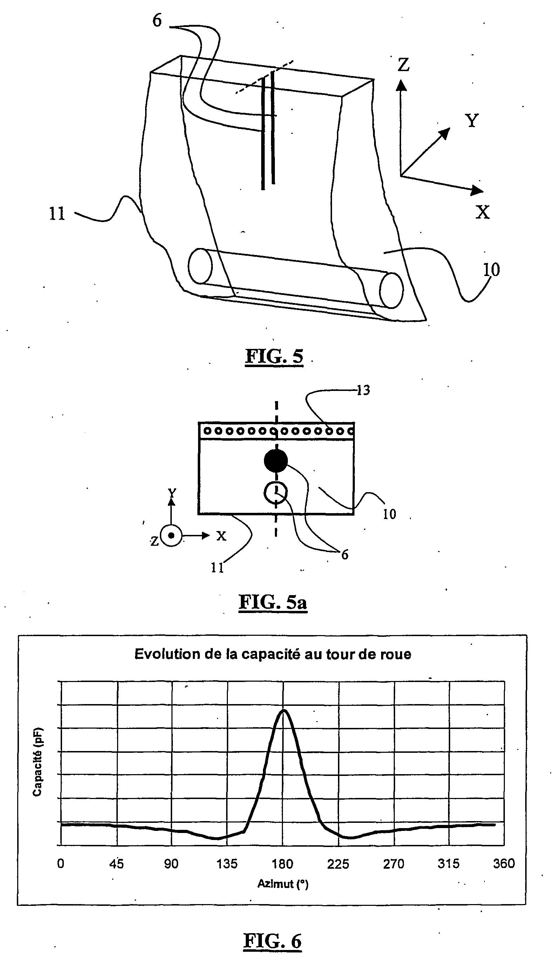

Les figures 5 et 5a illustrent une autre façon d'instrumenter le flanc d'un pneumatique. Les fils métalliques 6 qui constituent le dipôle électrique sont sensiblement parallèles entre eux et au flanc, s'étendent radialement et sont ici distants l'un de l'autre dans la direction de l'épaisseur du flanc c'est à dire la direction axiale du pneumatique (donc situés dans le plan YZ du repère des figures 5 et 5a).

De la même façon que précédemment, le fonctionnement mécanique du pneumatique n'est pratiquement pas perturbé par la présence de ces fils. Ainsi disposés, l'évolution de l'impédance capacitive ou de la capacité entre les fils métalliques 6 est représentative des variations de l'épaisseur du flanc. L'épaisseur du flanc varie en relation avec l'extension circonférentielle du flanc et sa flexion conformément à la loi de Poisson. Celle-ci régit de manière connue les déformations d'un matériau selon des directions perpendiculaires.

La figure 6 est un graphique montrant l'évolution de la capacité mesurée du dipôle électrique décrit à la figure 5 lorsque le pneumatique effectue une rotation complète dans un cas de charge donné.

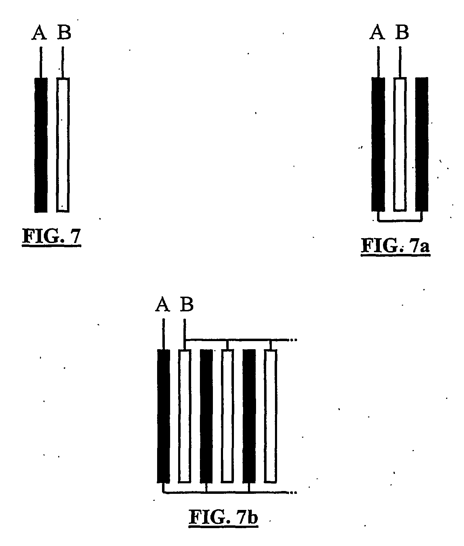

Il peut être avantageux qu'au moins une des deux électrodes métalliques du dipôle électrique soit en forme de peigne. Les électrodes métalliques 6 sont alors positionnées de telle façon que chaque dent de l'une des électrodes jouxte une ou deux dents de l'autre électrode (peigne inter-digités). Les figures 7, 7a, et 7b montrent des variantes de ce principe. La figure 7 correspond au cas où le capteur est constitué de deux électrodes filaires simples A et B comme on les a décrites sur les figures précédentes. La figure 7a illustre une deuxième façon de réaliser un dipôle électrique. L'électrode A consiste en un fil métallique et l'électrode B consiste en deux fils métalliques reliés entre eux (peigne à deux dents). L'électrode A et les dents de l'électrode B sont sensiblement parallèles entre elles et l'électrode A est placée entre les deux dents de l'électrode B en forme de peigne. La figure 7b illustre la façon générale de réaliser un dipôle électrique. Les deux électrodes A et B consistent chacune en plusieurs conducteurs reliés entre eux, en forme de peigne. La différence de nombre de dents des électrodes A et B n'excède pas 1, les dents des électrodes A et B étant placées de telle façon que chaque dent d'une électrode jouxte 1 ou 2 dents de l'autre électrode et que deux dents voisines soient sensiblement parallèles entre elles.

Particulièrement dans l'application à la mesure de l'extension circonférentielle du flanc, l'utilisation d'électrodes en forme de peigne présente au moins deux avantages. Un premier avantage est que la variation de caractéristique capacitive avec l'extension circonférentielle est d'autant plus grande (et donc potentiellement plus simple à mesurer) que le nombre de dents des peignes constituant le dipôle électrique est important. Un second avantage réside dans le fait que la mesure, concernant une zone plus étendue de la structure, représente l'équivalent de la "moyenne" de plusieurs mesures locales. Ceci réduit la sensibilité du dispositif à la dispersion des propriétés mécaniques locales du pneumatique.

Les déformations des zones instrumentées du flanc du pneumatique ont lieu principalement lors du passage dans l'aire de contact. Il peut être intéressant de combiner plusieurs capteurs sur la circonférence du pneumatique. Si l'on raccorde en parallèle cette pluralité de capteurs, on peut faire plusieurs mesures significatives à chaque tour de roue. Alors, l'évolution de la capacité mesurée rendra compte des déformations successives de plusieurs zones du flanc. Le recouvrement éventuel des différentes déformations peut être pris en compte par un traitement du signal approprié.

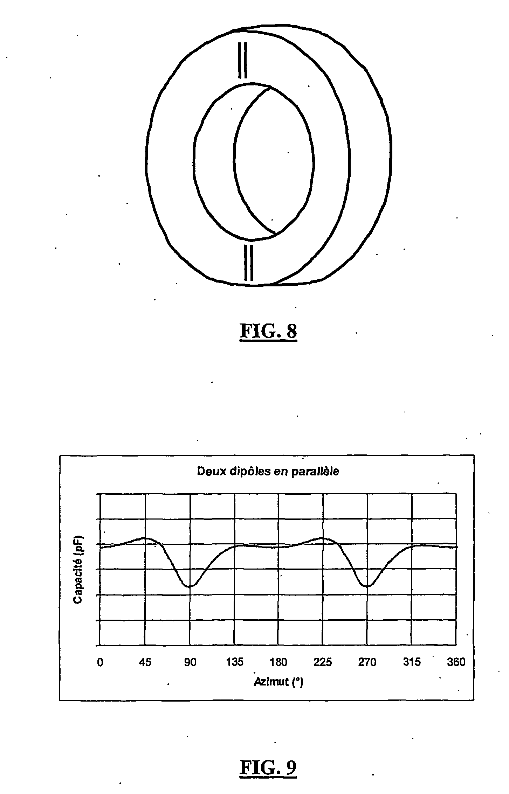

Cette combinaison est illustrée schématiquement sur la figure 8 dans le cas de deux dipôles électriques répartis sur la circonférence d'un flanc. Chacun des dipôles est configuré selon l'exemple de la figure 4 et l'ensemble est connecté en parallèle. Le graphique de la figure 9 montre l'évolution de l'impédance capacitive lorsque le pneumatique roule dans les mêmes conditions que pour la figure 4b. On constate que le signal correspond bien à la somme de deux signaux indépendants pratiquement sans recouvrement dans le cas de deux dipôles répartis à 180° l'un de l'autre autour de la roue. Cependant, ceci n'est qu'un exemple non limitatif car on peut également connecter un nombre plus important de dipôles élémentaires et appliquer ce même principe à d'autres configurations, par exemple celles des figures 1 à 2c ou celle de la figure 4.

Il peut également être intéressant, pour améliorer le volume de données utilisées par le traitement du signal, d'instrumenter les deux flancs du pneumatique avec un ou plusieurs configurations de capteurs selon l'invention.

Le dispositif de l'invention peut être mis en oeuvre sous la forme d'un dispositif intégré au pneumatique mais également sous la forme d'un élément fabriqué indépendamment et fixé sur le pneumatique au cours de sa fabrication ou à la suite de celle-ci.

Le dispositif de l'invention peut également être implanté dans un accessoire du pneumatique tel qu'une chambre à air qui est soumis aux déformations du pneumatique.

Les illustrations de l'invention sont ici limitées à l'application de l'invention au pneumatique mais comme exposé dans le préambule de la présente description l'invention s'applique de manière similaire dans d'autres structures comprenant un corps élastomérique comme par exemple les articulations élastomériques destinées à la liaison au sol d'un véhicule.

De préférence, les dimensions géométriques des fils métalliques constituant les dipôles électriques doivent être faibles, à savoir des diamètres de fils inférieurs ou égaux à 1 mm, et des longueurs de fils inférieures ou égales à 1 cm, de telle sorte que leur insertion ne perturbe pas trop le fonctionnement mécanique du pneumatique.

Pour réduire l'effet de perturbations électromagnétiques extérieures, qui peuvent être, le cas échéant, sources d'erreurs sur l'évaluation des déformations, le dispositif de l'invention peut également comprendre un blindage électromagnétique. Ce blindage électromagnétique doit être suffisamment électriquement conducteur, et ses propriétés électriques intrinsèques (conductivité, permittivité) suffisamment stables mécaniquement et thermiquement, pour ne pas modifier le fonctionnement électrique des moyens de mesures. Le matériau constituant le blindage électromagnétique doit être suffisamment déformable pour ne pas modifier le fonctionnement mécanique de la structure à laquelle est associée le dispositif de l'invention.

## Revendications

1. Dispositif d'évaluation de déformations d'une structure comprenant un corps élastomérique, ledit dispositif comprenant un dipôle dont le diélectrique est formé par ledit corps élastomérique et un circuit électronique d'analyse sensible à une variation d'une caractéristique capacitive du dipôle occasionnée par lesdites déformations dudit corps, ledit dispositif étant **caractérisé en ce que** le dipôle est constitué d'électrodes filaires sensiblement parallèles entre lesquelles ladite caractéristique capacitive varie en fonction desdites déformations.

2. Dispositif selon la revendication 1 comprenant en outre des moyens d'évaluation efforts subis par ladite structure en fonction desdites déformations provoquées par lesdits efforts, la résistivité dudit corps élastomérique étant supérieure à 10¹³ Ω.cm.

3. Dispositif selon l'une des revendications précédentes destiné à être mis en oeuvre dans un pneumatique.

4. Pneumatique comportant au moins un dispositif selon l'une des revendications précédentes.

5. Pneumatique selon la revendication 4, le dipôle étant situé dans l'épaisseur de la bande de roulement.

6. Pneumatique selon la revendication 5, le dipôle étant situé dans le volume d'un élément de sculpture.

7. Pneumatique selon la revendication 5, le diélectrique (103) étant constitué par le matériau qui constitue la bande de roulement au moins dans la zone où il se situe.

8. Pneumatique selon l'une des revendications 5 à 7 comprenant au moins un dispositif selon la revendication 3, ledit dispositif comprenant deux électrodes filaires (6) sensiblement perpendiculaires à la direction longitudinale (X) de la bande de roulement et sensiblement parallèles à la direction transversale (Y) de la bande de roulement.

9. Pneumatique selon l'une des revendications 5 à 7 comprenant au moins un dispositif selon la revendication 3, ledit dispositif comprenant deux électrodes filaires (6) sensiblement perpendiculaires à la direction transversale (Y) de la bande de roulement et sensiblement parallèles à la direction longitudinale (X) de la bande de roulement.

10. Pneumatique selon l'une des revendications 8 ou 9, lesdites électrodes étant situées sensiblement dans le même plan radial de la bande de roulement.

11. Pneumatique selon l'une des revendications 8 ou 9, ledit dispositif comprenant au moins trois électrodes (60; 61, 62) qui constituent au moins deux dipôles.

12. Pneumatique selon la revendication 5 comprenant au moins un dispositif selon la revendication 3, ledit dispositif comprenant deux électrodes filaires situées dans une zone de la bande de roulement qui n'est pas destinée à entrer en contact avec le sol lors du roulage du pneumatique.

13. Pneumatique selon la revendication 4, ledit dispositif étant situé dans un flanc dudit pneumatique.

14. Pneumatique selon la revendication 13, ledit diélectrique étant constitué par le matériau élastomérique qui constitue ledit flanc au moins dans la zone où il se situe.

15. Pneumatique selon l'une des revendications 13 ou 14, ledit dipôle comprenant des électrodes sensiblement parallèles, orientées sensiblement radialement.

16. Pneumatique selon la revendication 15, lesdites électrodes étant sensiblement parallèles entre elles et au flanc et s'étendant le long d'un rayon du pneumatique, chacune desdites électrodes étant située sensiblement à la même distance du plan médian du pneumatique.

17. Pneumatique selon la revendication 15, lesdites électrodes étant sensiblement parallèles entre elles et au flanc et s'étendant le long d'un rayon du pneumatique, chacune desdites électrodes étant distantes l'une de l'autre dans la direction de l'épaisseur du flanc.

18. Pneumatique selon l'une des revendications 15 à 17, les électrodes étant constituées par des peignes inter-digités.

19. Pneumatique selon l'une des revendications 15 à 18, comprenant une pluralité de dipôles disposés le long de la circonférence du flanc et connectés entre eux en parallèle pour constituer un dipôle vinique.

## Claims

1. Device for evaluating deformations of a structure comprising an elastomeric body, said device comprising a dipole, the dielectric of which is formed by said elastomeric body and an electronic analysing circuit sensitive to a variation of a capacitive characteristic of the dipole caused by said deformations of said body, said device being **characterized in that** the dipole comprises filar electrodes between which said capacitive characteristic varies as a function of said deformations, said electrodes being substantially parallel.

2. Device according to Claim 1, further comprising means for evaluating forces to which said structure is subjected as a function of said deformations caused by said forces, the resistivity of said elastomeric body being greater than 10¹³ Ω.cm.

3. Device according to one of the preceding claims, intended to be employed in a pneumatic tire.

4. Pneumatic tire including at least one device according to claim 3.

5. Pneumatic tire according to Claim 4 comprising a tread, the dipole being situated in the thickness of said tread.

6. Pneumatic tire according to Claim 5, the dipole being situated in the volume of a tread block.

7. Pneumatic tire according to Claim 5, the dielectric consisting of the material which constitutes the tread at least in the zone in which it is situated.

8. Pneumatic tire according to claim 5, comprising at least one device according to Claim 3, said device comprising two filar electrodes (6) substantially perpendicular to the longitudinal direction (X) of the tread and substantially parallel to the transverse direction (Y) of the tread.

9. Pneumatic tire according to Claim 5, comprising at least one device according to Claim 3, said device comprising two filar electrodes (6) substantially perpendicular to the transverse direction (Y) of the tread and substantially parallel to the longitudinal direction (X) of the tread.

10. Pneumatic tire according to Claim 8 or 9, said electrodes being situated substantially in the same radial plane of the tread.

11. Pneumatic tire according to Claim 8 or 9, said device comprising at least three electrodes (60; 61, 62) which constitute at least two dipoles.

12. Pneumatic tire according to Claim 5, comprising at least one device according to Claim 3, the said device comprising two filar electrodes situated in a zone of the tread which is not intended to come into contact with the ground when the pneumatic tire is rolling.

13. Pneumatic tire according to Claim 4, the said device being situated in a sidewall of said pneumatic tire.

14. Pneumatic tire according to Claim 13, said dielectric consisting of the elastomeric material which constitutes said sidewall at least in the zone in which said dielectric is situated.

15. Pneumatic tire according to Claim 13, said dipole comprising electrodes which are substantially parallel and oriented substantially radially.

16. Pneumatic tire according to Claim 15, said electrodes being substantially parallel to one another and to the sidewall and extending along a radius of the pneumatic tire, each of said electrodes being situated substantially at the same distance from the centre plane of the pneumatic tire.

17. Pneumatic tire according to Claim 15, said electrodes being substantially parallel to one another and to the sidewall and extending along a radius of the pneumatic tire, each of the said electrodes being spaced from one another in the direction of the thickness of the sidewall.

18. Pneumatic tire according to Claim 15, the electrodes consisting of interdigitated combs.

19. Pneumatic tire according to Claim 15, comprising a plurality of dipoles arranged along the circumference of the sidewall and connected to one another in parallel to form a single dipole.

## Patentansprüche

1. Vorrichtung zur Bewertung von Verformungen einer einen Elastomerkörper enthaltenden Struktur, wobei die Vorrichtung einen Dipol, dessen Dielektrikum vom Elastomerkörper gebildet wird, und eine elektronische Analyseschaltung enthält, die auf eine Veränderung eines kapazitiven Kennwerts des Dipols anspricht, die durch die Verformungen des Körpers verursacht wird, wobei die Vorrichtung **dadurch gekennzeichnet ist, dass** der Dipol aus im Wesentlichen parallelen Drahtelektroden besteht, zwischen denen der kapazitive Kennwert abhängig von den Verformungen variiert.

2. Vorrichtung nach Anspruch 1, die außerdem Einrichtungen zur Bewertung von durch die Struktur erfahrenen Kräften abhängig von den durch die Kräfte hervorgerufenen Verformungen enthält, wobei der spezifische Widerstand des Elastomerkörpers höher als 10¹³ Ω.cm ist.

3. Vorrichtung nach einem der vorhergehenden Ansprüche, die dazu bestimmt ist, in einem Luftreifen angewendet zu werden.

4. Luftreifen, der mindestens eine Vorrichtung nach einem der vorhergehenden Ansprüche aufweist.

5. Luftreifen nach Anspruch 4, wobei der Dipol sich in der Dicke des Laufstreifens befindet.

6. Luftreifen nach Anspruch 5, wobei der Dipol sich im Volumen eines Profilelements befindet.

7. Luftreifen nach Anspruch 5, wobei das Dielektrikum (103) aus dem Material besteht, das den Laufstreifens mindestens in dem Bereich bildet, in dem es sich befindet.

8. Luftreifen nach einem der Ansprüche 5 bis 7, der mindestens eine Vorrichtung nach Anspruch 3 enthält, wobei die Vorrichtung zwei Drahtelektroden (6) im Wesentlichen lotrecht zur Längsrichtung (X) des Laufstreifens und im Wesentlichen parallel zur Querrichtung (Y) des Laufstreifens enthält.

9. Luftreifen nach einem der Ansprüche 5 bis 7, der mindestens eine Vorrichtung nach Anspruch 3 enthält, wobei die Vorrichtung zwei Drahtelektroden (6) im Wesentlichen lotrecht zur Querrichtung (Y) des Laufstreifens und im Wesentlichen parallel zur Längsrichtung (X) des Laufstreifens enthält.

10. Luftreifen nach einem der Ansprüche 8 oder 9, wobei die Elektroden sich im Wesentlichen in der gleichen radialen Ebene des Laufstreifens befinden.

11. Luftreifen nach einem der Ansprüche 8 oder 9, wobei die Vorrichtung mindestens drei Elektroden (60; 61, 62) enthält, die mindestens zwei Dipole bilden.

12. Luftreifen nach Anspruch 5, der mindestens eine Vorrichtung nach Anspruch 3 enthält, wobei die Vorrichtung zwei Drahtelektroden enthält, die sich in einem Bereich des Laufstreifens befinden, der nicht dazu bestimmt ist, beim Rollen des Luftreifens mit dem Boden in Kontakt zu kommen.

13. Luftreifen nach Anspruch 4, wobei die Vorrichtung sich in einer Flanke des Luftreifens befindet.

14. Luftreifen nach Anspruch 13, wobei das Dielektrikum aus dem Elastomermaterial besteht, das die Flanke mindestens in dem Bereich bildet, in dem es sich befindet.

15. Luftreifen nach einem der Ansprüche 13 oder 14, wobei der Dipol im Wesentlichen parallele Dioden enthält, die im Wesentlichen radial ausgerichtet sind.

16. Luftreifen nach Anspruch 15, wobei die Elektroden im Wesentlichen parallel zueinander und zur Flanke sind und sich entlang eines Radius des Luftreifens erstrecken, wobei jede der Elektroden sich im Wesentlichen im gleichen Abstand zur Mittelebene des Luftreifens befindet.

17. Luftreifen nach Anspruch 15, wobei die Elektroden im Wesentlichen parallel zueinander und zur Flanke sind und sich entlang eines Radius des Luftreifens erstrecken, wobei jede der Elektroden in Richtung der Dicke der Flanke zueinander beabstandet sind.

18. Luftreifen nach einem der Ansprüche 15 bis 17, wobei die Elektroden aus ineinandergreifenden Kämmen bestehen.

19. Luftreifen nach einem der Ansprüche 15 bis 18, der eine Vielzahl von Dipolen enthält, die entlang des Umfangs der Flanke angeordnet und parallel miteinander verbunden sind, um einen einzigen Dipol zu bilden.
